# EUROPÄISCHE PATENTANMELDUNG

(11) **EP 2 371 211 A2**
(43) Veröffentlichungstag der Anmeldung: **05.10.2011**
(21) Anmeldenummer: 11002122.7
(22) Anmeldetag: 15.03.2011
(51) Int. Cl.: A01K 27/00

(54) **Bremseinrichtung für eine Seilrolle einer mechanisch auf- und abwickelbaren Leine zum Führen von Tieren**

(30) Priorität: 03.04.2010 DE 202010004484 U
(71) Anmelder: Flexi-Bogdahn Technik GmbH & Co. KG, 22941 Bargteheide (DE)
(72) Erfinder: Bogdahn, Manfred, 22391 Hamburg (DE)
(74) Vertreter: Jaeschke, Rainer

(57) **Zusammenfassung**

Die Erfindung betrifft eine Bremseinrichtung für eine Seilrolle einer mechanisch auf- und abwickelbaren Leine zum Führen von Tieren, welche Seilrolle in einem Gehäuse entgegen der Kraft einer Feder in Abwickelrichtung und aufgrund der Kraft der Feder in Aufwickelrichtung drehbar gelagert ist und mit einer Bremstaste der Bremseinrichtung zusammenwirkt, um die Seilrolle anzuhalten. Gemäß der Erfindung wird vorgeschlagen, dass die Seilrolle mit einer Bremsscheibe verbunden ist, die entgegen einer Dämpfungskraft relativ zur Seilrolle drehbar und an dem Gehäuse arretierbar ist.

## Beschreibung

### Beschreibung

Die Erfindung betrifft eine Bremseinrichtung für eine Seilrolle einer mechanisch auf- und abwickelbaren Leine zum Führen von Tieren, welche Seilrolle in einem Gehäuse entgegen der Kraft einer Feder in Abwickelrichtung und aufgrund der Kraft der Feder in Aufwickelrichtung drehbar gelagert ist und mit einer Bremstaste der Bremseinrichtung zusammenwirkt, um die Seilrolle anzuhalten. Insbesondere betrifft die Erfindung eine Hundeleine, so dass im Folgenden überwiegend gesprochen wird, ohne dass damit eine Beschränkung verbunden sein soll.

Eine derartige Hundeleine mit einer Bremseinrichtung ist aus der EP 0 941 657 B1 bekannt. Die Bremstaste der Bremseinrichtung wirkt hier mit Rastvorsprüngen auf der Seilrolle zusammen, um die Seilrolle an dem Gehäuse zu arretieren. Bei dieser Bremseinrichtung kann der Benutzer zwischen der Loslage der Bremstaste und der Wirklage der Bremstaste wählen. In der Loslage ist die Seilrolle relativ zum Gehäuse frei drehbar. Der an der Leine befindliche Hund kann sich demnach entsprechend der maximalen Länge der Leine frei bewegen. Kommt der Hund näher an den Benutzer heran, wird die überschüssige Leine selbsttätig aufgrund der Federkraft auf die Seilrolle gewickelt. In der Wirklage wird zumindest ein weiteres Abwickeln der Leine von der Seilrolle verhindert. Entfernt sich nun der Hund relativ schnell von dem Benutzer, wird durch das Bewegen der Bremstaste von der Loslage in die Wirklage ein relativ harter und abrupter Halt der Drehbewegung der Seilrolle erreicht. Es entsteht eine ruckartige Belastung des Benutzers, die als unangenehm empfunden werden kann.

Der Erfindung liegt die Aufgabe zugrunde, eine Bremseinrichtung der eingangs geschilderten Art so auszubilden, dass die Drehbewegung relativ zum Gehäuse gedämpft werden kann.

Die Aufgabe wird gemäß der Erfindung dadurch gelöst, dass die Seilrolle mit einer Bremsscheibe verbunden ist, die entgegen einer Dämpfungskraft relativ zur Seilrolle drehbar und an dem Gehäuse arretierbar ist. Durch diese Anordnung wird erreicht, dass zum Dämpfen der Drehbewegung die Bremsscheibe an dem Gehäuse arretiert wird. Dann kann sich die Seilrolle relativ zum Gehäuse nur entgegen der Dämpfungskraft bewegen. Diese Dämpfungskraft wirkt jedoch nicht unmittelbar oder ruckartig auf den Benutzer, sondern es erfolgt ein sanftes Abbremsen der Seilrolle. Anschließend kann die Bremstaste betätigt werden, um die Seilrolle an dem Gehäuse zu arretieren. Erst dann ist ein weiteres Abwickeln der Leine von der Seilrolle nicht mehr möglich.

Es kann vorgesehen werden, dass die Bremsscheiben reibend mit der Seilrolle zusammenwirkt. Diese Ausführungsform ist mit relativ einfachen Mitteln herstellbar. Das Problem hierbei besteht darin, dass sich die Reibflächen im Laufe des Gebrauchs abnutzen, so dass die Dämpfungswirkung im Laufe der Zeit nachlässt.

Gemäß einer bevorzugten Ausführungsform der Erfindung ist vorgesehen, dass die Bremsscheibe über ein Fluid mit der Seilrolle zusammenwirkt. Zwischen der Seilrolle und der Bremsscheibe befindet sich ein Fluid, durch das ein Bremsmoment bei einer relativen Drehung der Bremsscheibe und der Seilrolle erzeugt wird. Eine derartige Fluidbremse ist verschleißfrei und hat auch nach längerer Gebrauchsdauer noch die gleichen Dämpfungseigenschaften.

Ein weiterer Vorteil ist darin zu sehen, dass mit steigender Relativgeschwindigkeit zwischen Bremsscheibe und Seilrolle die Dämpfungskraft steigt. Es wird dadurch mit einfachen Mitteln erreicht, dass bei einer schnellen Drehbewegung der Seilrolle das Arretieren der Bremsscheibe ein relativ hohes Bremsmoment erzeugt wird. Der sich entfernende Hund kann demnach wirksam angehalten werden. Insbesondere wird erreicht, dass die Leine bei dem Abbremsvorgang dem Benutzer nicht aus der Hand gerissen wird.

Es kann vorgesehen werden, dass die Seilrolle drehfest mit einer Kupplungsscheibe verbunden ist, die in einem umlaufenden Spalt der Bremsscheibe läuft, und dass das Fluid in dem Spalt vorhanden ist. Eine derartige Anordnung ist leicht herstellbar. Zudem kann durch die Ausbildung und die Abmessungen des Spaltes zwischen der Kupplungsscheibe und der Bremsscheibe die gewünschte Dämpfungskraft bei arretierter Bremsscheibe erzielt werden. Es kann hierbei vorgesehen sein, dass wenigstens eine der einander zugekehrten Flächen der Bremsscheibe und der Kupplungsscheibe profiliert ist. Hierdurch kann das erzeugte Bremsmoment weiter erhöht werden.

Es kann vorgesehen werden, dass die Bremsscheibe durch ein Betätigungselement an dem Gehäuse arretierbar ist. Dieses Betätigungselement ist von außen durch den Benutzer bedienbar, so dass die gedämpfte Drehbewegung der Seilrolle jederzeit eingestellt werden kann.

Gemäß einer bevorzugten Ausführungsform der Erfindung ist vorgesehen, dass die Bremstaste in einer ersten Wirkposition die Bremsscheibe am Gehäuse arretiert und in einer zweiten Wirkposition die Seilrolle am Gehäuse arretiert. Es kann hierbei vorgesehen sein, dass die Bremstaste eine im wesentlichen radial zur Seilrolle verlaufende lineare Bewegung durchfährt. Im Zuge dieser Bewegung kann zunächst die Bremsscheibe am Gehäuse arretiert werden. In dieser Lage wird die Drehbewegung der Seilrolle gebremst, aber noch nicht blockiert.

Im Zuge der weiteren Bewegung der Bremstaste gelangt diese in ihre Wirkposition, in der die Bremstaste mit Rastnasen auf der Seilrolle in Eingriff kommt, um die Seilrolle am Gehäuse zu arretieren. Erst in dieser zweiten Wirkposition ist ein weiteres Abwickeln der Leine von der Seilrolle nicht mehr möglich. Die erste und zweite Wirkposition liegen somit in Betätigungsrichtung hintereinander, wodurch eine bedienerfreundliche Handhabung erzielt wird.

In der Loslage der Bremstaste sind die Seilrolle und die Bremsscheibe relativ zum Gehäuse frei drehbar. Es kann weiterhin vorgesehen werden, dass die Bremstaste in der ersten Wirkposition durch einen durch den Bediener überwindbaren Anschlag gehalten ist. Hierdurch wird der Bedienkomfort der Leine wesentlich erhöht. Der Benutzer spürt einen merklichen Anschlag, an dem er die Bremstaste halten muss, um die gedämpfte Abwickelbewegung oder Aufwickelbewegung der Seilrolle relativ zum Gehäuse zu bewirken. Durch einen verstärkten Druck auf die Bremstaste wird dieser Anschlag überwunden, so dass die vollständige Arretierung der Seilrolle an dem Gehäuse erfolgt.

Die Bremsscheibe kann als in axialer Richtung schmale Scheibe ausgebildet sein, die axial neben der Seilrolle angeordnet ist. Hierdurch wird erreicht, dass das Gehäuse nur unwesentlich breiter ist als das einer herkömmlichen Leine ohne diese Dämpfungsmöglichkeit. Die Bremsscheibe ist relativ zur axialen Erstreckung der Seilrolle dünn ausgebildet. Es kann weiterhin vorgesehen sein, dass die Bremsscheibe eine verdickte Nabe aufweist, in der der Spalt zur Aufnahme der Kupplungsscheibe angeordnet ist. Diese Nabe kann teilweise in der Nabe der Seilrolle vorhanden sein. Auch hierdurch wird das Gehäuse nicht wesentlich verbreitert, so dass ein ansprechendes Äußeres der Leine möglich ist.

Gemäß einer weitergehenden Ausführungsform der Erfindung ist vorgesehen, dass die Bremsscheibe und die Kupplungsscheibe eine vormontierte Einheit bilden, die mit der Seilrolle verbindbar ist. Dazu wird die Kupplungsscheibe drehfest mit der Seilrolle verbunden. Hierdurch wird die Herstellung der Leine mit einer derartigen Bremseinrichtung vereinfacht.

Die Erfindung wird im Folgenden anhand der schematischen Zeichnung näher erläutert. Es zeigen:
- Figur 1: die Seilrolle mit der Bremstaste in deren Loslage in verschiedenen Ansichten,
- Figur 2: die Seilrolle mit der Bremstaste in deren ersten Wirkposition in verschiedenen Ansichten,
- Figur 3: die Seilrolle mit der Bremstaste in deren zweiten Wirkposition in verschiedenen Ansichten, und
- Figur 4: einen Schnitt durch die Seilrolle mit einer Bremseinrichtung gemäß der Erfindung.

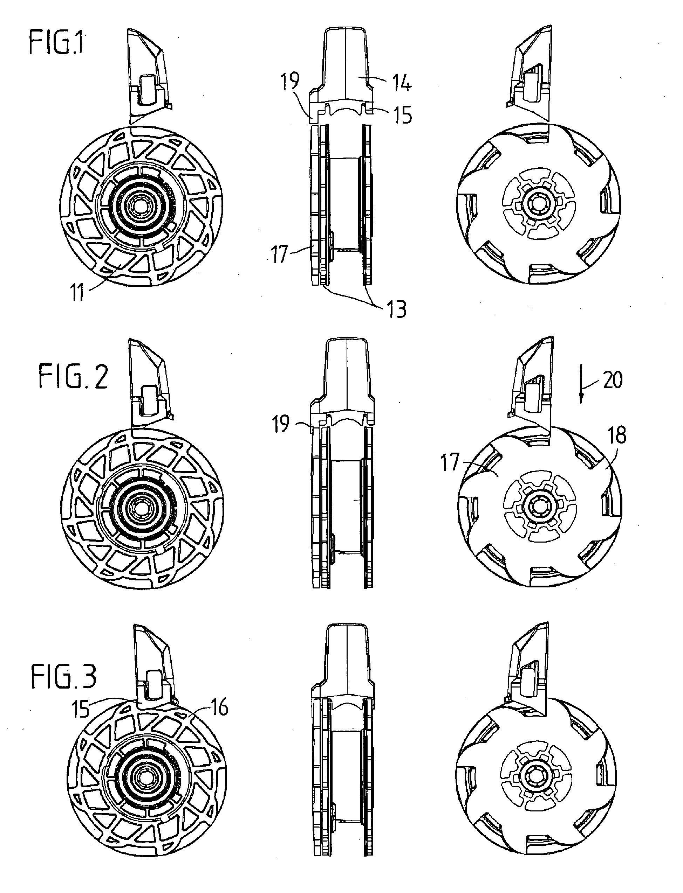

Die in der Zeichnung dargestellte Seilrolle 11 ist um eine Achse 12 drehbar in einem nicht gezeigten Gehäuse gelagert. Die Seilrolle 11 weist zwei beabstandete Flanken 13 auf, zwischen denen die Leine aufgewickelt werden kann. Die Leine wird durch eine Öffnung des Gehäuses aus diesem heraus geführt. Es ist eine Bremstaste 14 vorhanden, die entgegen der Kraft einer nicht gezeigten Druckfeder in etwa in Richtung auf die Drehachse hin- und her bewegbar am Gehäuse gelagert ist. Die Bremstaste weist Rastnasen 15 auf, die in der in Figur 3 dargestellten zweiten Wirkposition der Bremstaste mit Vorsprüngen 16 auf den Flanken 13 der Seilrolle 11 zusammenwirken. In dieser Position kann sich die Seilrolle nicht mehr relativ zum Gehäuse drehen. Die Ausbildung einer derartigen Hundeleine ist allgemein bekannt und bedarf daher keiner weiteren Erläuterung.

Axial neben der Seilrolle ist eine Bremsscheibe 17 vorgesehen, die sich relativ zur Seilrolle 11 entgegen einer Dämpfungskraft drehen kann. Die Bremsscheibe 17 dreht dabei um die gleiche Drehachse 12 wie auch die Seilrolle 11. Es sind Vorsprünge 18 auf der Umfangsfläche der Bremsscheibe 17 vorhanden, die mit einem weiteren Vorsprung 19 der Bremstaste zusammenwirken.

Im einzelnen ist die Anordnung so getroffen, dass der weitere Vorsprung 19 in der in Figur 1 gezeigten Loslage nicht in Eingriff mit den Rastnasen 18 der Bremsscheibe 17 ist. In dieser Loslage befinden sich auch die Rastnasen 15 außer Eingriff mit den Vorsprüngen 16 der Seilrolle 11. Die Seilrolle ist demnach zusammen mit der Bremsscheibe 17 frei im Gehäuse drehbar gelagert.

Wird nun die Bremstaste 14 in Richtung des Pfeils 20 in Richtung auf die Seilrolle gedrückt, gelangt zuerst der weitere Vorsprung 19 in Eingriff mit einem ihm zugeordneten Vorsprung 18 der Bremsscheibe 17. Es ist somit eine erste Wirkposition vorhanden, in der der weitere Vorsprung 19 in Eingriff mit den Vorsprüngen 18 der Bremsscheibe 17 ist. Die Rastnasen 15 sind in dieser Position der Bremstaste jedoch noch nicht in Eingriff mit einem der Vorsprünge 16 der Seilrolle. Diese Position der Bremstaste 14 ist in Figur 2 dargestellt.

In dieser ersten Wirkposition der Bremstaste ist demnach die Bremsscheibe relativ zum Gehäuse arretiert. Die Seilrolle 11 kann sich demnach nur durch Überwinden der Reibkraft zwischen der Bremsscheibe 17 und der Seilrolle 11 drehen. In dieser ersten Wirkposition ist ein Auf-oder Abwickeln der Hundeleine nur mit größerem Kraftaufwand möglich. Es kann vorgesehen werden, dass die Bremstaste 14 in dieser ersten Wirkposition durch einen Anschlag gehalten wird. Durch diesen Anschlag wird eine klare Position der Bremstaste relativ zum Gehäuse definiert, in der der weitere Vorsprung 19 zwar in Eingriff mit der Bremsscheibe 17, die Rastnase 15 jedoch noch nicht in Eingriff mit den Vorsprüngen 16 der Seilrolle ist.

Durch einen weiteren Druck auf die Bremstaste 14 in Richtung des Pfeils 20 gelangt die Bremstaste in ihre zweite Wirkposition, die in Figur 3 gezeigt ist. In dieser Position gelangt die Rastnase 15 in Eingriff mit einem der Vorsprüngen 16 der Seilrolle, so dass ein weiteres Drehen der Seilrolle relativ zum Gehäuse verhindert wird. Der weitere Auslauf des Hundes ist damit gestoppt.

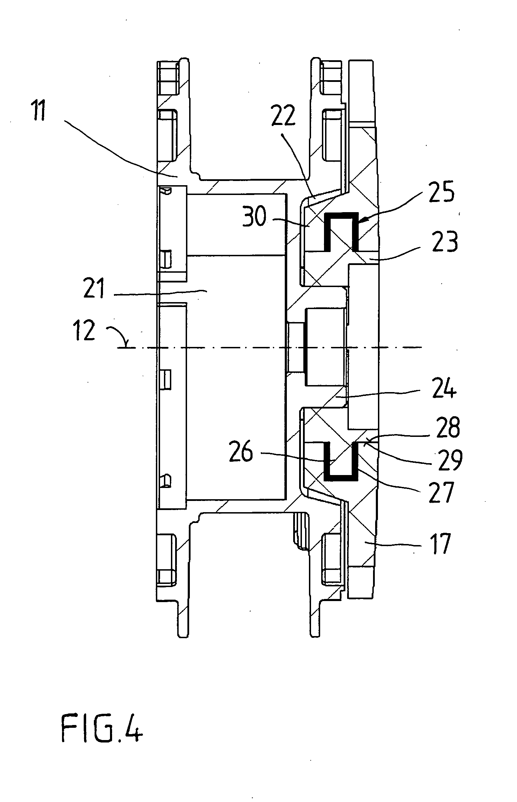

In Figur 4 ist eine mögliche Ausführungsform der Erfindung zwischen Bremsscheibe 17 und Seilrolle 11 gezeigt. Die Seilrolle 11 weist eine Nabe 21 auf, in der die Feder für die Aufwickelbewegung angeordnet ist. Die Nabe weist weiterhin eine einseitige Vertiefung 22 auf, in der eine Kupplungsscheibe 23 drehfest mit der Seilrolle 11 über einen Zapfen 24 verbunden ist.

Die Kupplungsscheibe 23 ist über ein Fluid 25 mit der Bremsscheibe 17 verbunden. Im Einzelnen ist die Anordnung so getroffen, dass die Kupplungsscheibe 23 mit einem umlaufenden radialen Vorsprung 26 in einer Umfangsnut 27 der Bremsscheibe 17 läuft. Die Bremsscheibe 17 weist hierzu eine im Vergleich zu der Dicke der Bremsscheibe verbreiterte Nabe 30 auf, in der die Umfangsnut angeordnet ist.

Zwischen dem radialen Vorsprung 26 und der Umfangsnut 27 ist ein Spalt vorhanden, in dem sich das Fluid befindet. Die Kupplungsscheibe 23 und die Bremsscheibe 17 sind demnach relativ zueinander drehbar. Die relative Drehbewegung zwischen der Bremsscheibe 17 und der Kupplungsscheibe 23 und somit der Seilrolle 11 wird jedoch durch das in dem Spalt vorhandene Fluid 25 gedämpft.

Durch diese Anordndung wird erreicht, dass durch Arretierung der Bremsscheibe 17 am Gehäuse die Seilrolle sich nur nach Überwindung der Dämpfungs- oder Reibkraft weiter drehen kann. Erst wenn die Bremstaste in Richtung des Pfeils 20 ganz niedergedrückt wird, erfolgt die vollständige Arretierung der Seilrolle am Gehäuse.

Die Bremsscheibe 17 kann beispielsweise in axialer Richtung zweiteilig ausgebildet sein, um den umlaufenden Vorsprung 26 der Kupplungsscheibe aufnehmen zu können. Die einander zugewandten Umfangsflächen 28, 29 der Bremsscheibe 17 beziehungsweise der Kupplungsscheibe 23 können dichtend aufeinander liegen, so dass ein Austreten des Fluids nicht zu befürchten ist. In diesen Flächen können aber auch Dichtungselemente vorhanden sein.

Mit einer derartig ausgebildeten Hundeleine ist es möglich, die Drehbewegung der Seilrolle abzubremsen, bevor eine vollständige Arretierung am Gehäuse erfolgt. Dies ist für den Benutzer wesentlich angenehmer zu handhaben. Weiterhin kann vorgesehen werden, dass die durch die Bremsscheibe auf die Seilrolle aufgebrachte Dämpfungskraft größer ist als die Rückstellkraft der Feder, mit der die Leine auf die Seilrolle aufgewickelt wird. Dann wird ein gebremstes Aufwickeln vermieden, und der Hund spürt in Abwickelrichtung einen deutlichen Widerstand.

## Patentansprüche

1. Bremseinrichtung für eine Seilrolle (11) einer mechanisch auf- und abwickelbaren Leine zum Führen von Tieren, welche Seilrolle (11) in einem Gehäuse entgegen der Kraft einer Feder in Abwickelrichtung und aufgrund der Kraft der Feder in Aufwickelrichtung drehbar gelagert ist und mit einer Bremstaste (14) der Bremseinrichtung zusammenwirkt, um die Seilrolle anzuhalten, **dadurch gekennzeichnet, dass** die Seilrolle (14) mit einer Bremsscheibe (17) verbunden ist, die entgegen einer Dämpfungskraft relativ zur Seilrolle drehbar und an dem Gehäuse arretierbar ist.

2. Bremseinrichtung nach Anspruch 1, **dadurch gekennzeichnet, dass** die Bremsscheibe reibend mit der Seilrolle zusammenwirkt.

3. Bremseinrichtung nach Anspruch 1, **dadurch gekennzeichnet, dass** die Bremsscheibe (17) über ein Fluid (25) mit der Seilrolle (11) zusammenwirkt.

4. Bremseinrichtung nach Anspruch 3, **dadurch gekennzeichnet, dass** die Seilrolle (11) drehfest mit einer Kupplungsscheibe (23) verbunden ist, die in einem umlaufenden Spalt (27) der Bremsscheibe (17) läuft, und dass das Fluid (25) in dem Spalt (27) vorhanden ist.

5. Bremseinrichtung nach Anspruch 3 oder 4, **dadurch gekennzeichnet, dass** wenigstens eine der einander zugekehrten Flächen der Bremsscheibe und der Kupplungsscheibe profiliert sind.

6. Bremseinrichtung nach einem der Ansprüche 1 bis 5, **dadurch gekennzeichnet, dass** die Bremsscheibe durch ein Betätigungselement an dem Gehäuse arretierbar ist.

7. Bremseinrichtung nach einem der Ansprüche 1 bis 5, **dadurch gekennzeichnet, dass** die Bremstaste (14) in einer ersten Wirkposition (Fig. 2) die Bremsscheibe (17) am Gehäuse arretiert und in einer zweiten Wirkposition (Fig. 3) die Seilrolle (11) am Gehäuse arretiert.

8. Bremseinrichtung nach einem der Ansprüche 1 bis 7, **dadurch gekennzeichnet, dass** in der Loslage (Fig. 1) der Bremstaste die Seilrolle und die Bremsscheibe relativ zum Gehäuse frei drehbar sind.

9. Bremseinrichtung nach Anspruch 7 oder 8, **dadurch gekennzeichnet, dass** die Bremstaste in der ersten Wirkposition durch einen überwindbaren Anschlag gehalten ist.

10. Bremseinrichtung nach einem der Ansprüche 1 bis 6, **dadurch gekennzeichnet, dass** die Bremsscheibe (17) als in axialer Richtung schmale Scheibe ausgebildet ist, die axial neben der Seilrolle angeordnet ist.

11. Bremseinrichtung nach einem der Ansprüche 4 bis 10, **dadurch gekennzeichnet, dass** die Bremsscheibe eine verdickte Nabe (30) aufweist, in der der Spalt (27) zur Aufnahme der Kupplungsscheibe angeordnet ist.

12. Bremseinrichtung nach einem der Ansprüche 1 bis 12, **dadurch gekennzeichnet, dass** die Bremsscheibe und die Kupplungsscheibe eine vormontierte Einheit bilden, die mit der Seilrolle verbindbar ist.
